# EUROPÄISCHE PATENTANMELDUNG

(11) **EP 2 743 051 A1**
(43) Veröffentlichungstag der Anmeldung: **18.06.2014**
(21) Anmeldenummer: 13180279.5
(22) Anmeldetag: 13.08.2013
(51) Int. Cl.: B29C 44/34, B29C 44/50, B29C 47/90, B29C 47/88

(54) **Verfahren zum Kühlen von geschäumten Kunststoffen**

(30) Priorität: 14.12.2012 EP 12197299
(71) Anmelder: Promix Solutions AG, 8406 Winterthur (CH)
(72) Erfinder: Schlummer, Christian, 8400 Winterthur (CH)
(74) Vertreter: Herrmann, Johanna

(57) **Zusammenfassung**

Ein Verfahren zur Kühlung eines geschäumten bandförmigen Extrudatstrangs (3) erfolgt in einer Anlage, die einen Extruder, eine Düse (1), eine Vakuumkühlvorrichtung (2) sowie eine Kühlwalze umfasst. Im Extruder wird ein treibmittelhaltiges Extrudat erzeugt. Das treibmittelhaltige Extrudat wird der Düse (1) zugeführt, wobei die Düse (1) eine Öffnung (7) aufweist, durch welche ein bandförmiger Extrudatstrang (3) erzeugt wird, welcher in oder nach der Düse (1) zu einem geschäumten bandförmigen Extrudatstrang (13) aufschäumt Der aus der Düse (1) austretende noch plastische bandförmige Extrudatstrang (13) wird zuerst durch eine statische Vakuumkühlvorrichtung (2, 25, 26) gekühlt, sodass ein vorgekühlter geschäumter bandförmiger Extrudatstrang (23) erhalten wird und der vorgekühlte geschäumte bandförmige Extrudatstrang (23) wird über eine Kühlwalze (40, 41, 42) geführt. Der vorgekühlte bandförmige geschäumte Extrudatstrang (23) liegt auf der Kühlwalze über einen Umschlingungswinkel von mindestens 20° an sodass der vorgekühlte bandförmige geschäumte Extrudatstrang (23) gekühlt wird.

## Beschreibung

Die Erfindung betrifft ein Verfahren zum Kühlen von geschäumten flachen Extrudaten wie zum Beispiel Platten und Folien, das sehr effizient ist und zu optimalen Oberflächenqualitäten führt.

Die Schaumextrusion ist ein Sonderverfahren der Extrusion, bei dem in einem Extruder einer Polymerschmelze ein oder mehrere Treibfluide zudosiert und vermischt werden, um ein geschäumtes Extrudat herzustellen. Neben chemischen Treibfluiden werden insbesondere physikalische Treibfluide zum Erzeugen einer zellulären Schaumstruktur verwendet, da diese kostengünstiger sind und keine Rückstände im Polymer bilden. Als physikalische Treibfluide kommen zum Beispiel Kohlendioxid, Stickstoff, Pentan, Wasser oder Gemische davon zum Einsatz. Beim physikalischen Schäumen wird das Treibfluid mit der Polymerschmelze unter hohem Druck in Kontakt gebracht und intensiv vermischt. Das Treibfluid geht mit der Polymerschmelze unter Druck bevorzugt eine einphasige Lösung ein und wird über eine Düse in die gewünschte Form gebracht, z. B. als Platte oder Folie. Diese Düse bildet üblicherweise die Austrittsöffnung für die treibmittelhaltige Polymerschmelze. Beim Extrudieren der mit Treibfluid versetzten Polymerschmelze durch die formgebende Düse expandiert das Treibfluid infolge des Druckabfalls in der Düse und bildet eine zelluläre Schaumstruktur. Es sind verschiedene für das Schäumen von flachen Extrudaten optimierte Düsenausführungen bekannt, wie zum Beispiel in der US6383425B1 dargestellt. Typischerweise ist der Auslassbereich der Düse mit Kühlbohrungen versehen, um das aufschäumende Extrudat zu kühlen.

Unter einem flachen Extrudat soll in der Folge ein bandförmiger Extrudatstrang verstanden werden, der aus einer schlitzförmigen Düse austritt. Je nach der Breite dieses Schlitzes wird der bandförmige Extrudatstrang als Folie oder als Platte bezeichnet. Durch die Breite des Schlitzes wird die Dicke des bandförmigen Extrudatstrangs am Austrittsende der Düse festgelegt. Als Folie wird ein dünner und biegbarer bandförmiger Extrudatstrang mit einer Dicke von typischerweise 10 bis 2000 µm bezeichnet. Als Platte wird ein steifer, eher dicker bandförmiger Extrudatstrang mit einer Dicke von typischerweise 0.5 bis 40 mm bezeichnet wobei die Übergänge fliessend sind.

Nach der Düse wird das Extrudat weiter abgekühlt um die Schaumstruktur zu verfestigen. Die weitere Abkühlung von geschäumten flachen Extrudaten erfolgt typischerweise mit Hilfe von temperierten Walzen. GB 1 264 852 beschreibt ein Verfahren, bei der ein geschäumtes flaches Extrudat auf einer einzelnen Kühlwalze abgelegt wird. US 3 855 376 offenbart ein Verfahren, bei dem ein rotierendes Walzenpaar zur Abkühlung des aus der Düse austretenden, flachen Extrudats verwendet wird. In EP 1 268 624 B1 ist ein physikalisches Schäumverfahren dargestellt, bei dem das flache Extrudat in einem Walzwerk mit drei temperierten Walzen abgekühlt wird.

In vielen Fällen ist die Oberflächenqualität von geschäumten und gekühlten flachen Extrudaten unbefriedigend und schlechter als bei ungeschäumten Extrudaten. Das Problem verstärkt sich bei zunehmenden Schäumgraden, zunehmender Zellgrösse und bei breiter Zellgrössenverteilung. Da mit physikalischen Treibmitteln gegenüber chemischen Treibmitteln meist höhere Schäumgrade erreicht werden können, die Schaumstruktur aber teilweise grobzelliger ist, entstehen speziell bei physikalisch geschäumten Produkten erhebliche Oberflächenprobleme, wie raue Oberflächen oder Wellenbildung.

Bei Einsatz einer einzelnen Kühlwalze auf dem das flache Extrudat abgelegt wird, wird naturgemäss nur eine Seite des flachen Extrudats intensiv gekühlt. Ferner fehlt der Anpressdruck durch eine entsprechende Gegenwalze. Beim Einsatz von zwei gegenüber liegenden Kühlwalzen ergibt sich eine linienförmige Berührung des Extrudats mit den Kühlflächen, sodass die Kontaktzeit und damit die Kühlleistung eingeschränkt sind. Das Extrudat wird hierzu zwischen den beiden gegenüber liegenden Kühlwalzen hindurch geführt.

Werden 3 Kühlwalzen verwendet, ergeben sich zwar zwei aufeinander folgende Umschlingungswinkel, jedoch werden die Vorder- und Rückseite des flachen Extrudats zeitlich nacheinander intensiv gekühlt, was speziell bei geschäumten Extrudaten zu unterschiedlichen Oberflächenresultaten, wie Rauheit und Glanzgraden führt. Der Kühleffekt der Kühlwalzen ist bei geschäumten Extrudaten zudem eingeschränkt, da die gebildeten Schaumzellen als Isolator wirken. Ferner ist zu berücksichtigen, dass bei gleichbleibendem Extruderdurchsatz durch die verringerte Dichte bei geschäumten Extrudaten entsprechend höhere Liniengeschwindigkeiten und somit kürzere Kontaktzeiten des Extrudats mit den Kühlflächen resultieren. In vielen Fällen ist bei geschäumten Extrudaten die Ausstossleistung begrenzt, da die Kühlleistung der Kühlwalzen durchsatzlimitierend ist.

Es gibt verschiedene Verfahren und Vorrichtungen wie zum Beispiel EP 0 925 900 (A1), US 5 997 784 oder DE 2 904 720 (A1), bei dem Extrudate und speziell geschäumte Extrudate in einer Kammer oder Kalibrierung unter Vakuum gekühlt werden. Je nach Ausführung handelt es sich um seitlich geschlossene Kammern, oder seitlich offene Platten, die direkt oder mit einem Abstand nachfolgend zur Düse angeordnet sind. Nachteilig bei der Kühlung von flachen Extrudaten in solchen Vorrichtungen und Verfahren ist, dass für eine genügende Kühlwirkung sehr lange Einheiten gebaut werden müssen oder aber die Durchsatzgeschwindigkeit und damit die Produktionsleistung der ganzen Anlage sehr gering ist. Bedingt durch den Schwund bei zunehmender Abkühlung besteht bei zunehmender Länge die Gefahr des Ablösens des Extrudates von der Apparateoberfläche was zu einer wesentlichen Verschlechterung der Kühlleistung führt. Zudem wird der Reibwiderstand zwischen der Apparatewandung und dem Extrudat bei langen Einheiten sehr hoch. Solchen Apparaten können Walzen, wie zum Beispiel in EP 0 925 900 (A1) dargestellt, nachgeschaltet werden, welche die primäre Aufgabe haben das Extrudat durch die Kühlvorrichtung zu ziehen.

Aufgabe der Erfindung ist es, ein Kalibier- und Kühlverfahren für flache geschäumte und speziell physikalisch geschäumte Extrudate mit hoher Kühlleistung und hoher Durchsatzgeschwindigkeit zu schaffen, bei dem eine optimale Oberflächenqualität des geschäumten Extrudats erreicht wird.

Die Aufgabe wird dadurch gelöst, dass das aus der Düse ausströmende noch plastische Extrudat zuerst durch eine statische Vakuumkühlvorrichtung und danach über Kühlwalzen gekühlt wird, wobei das Extrudat auf mindestens einer Kühlwalze über einen gewissen Umschlingungswinkel anliegend sein muss.

Dabei wird das aus der Düse ausströmende noch plastische Extrudat zuerst durch eine statische Vakuumkühlvorrichtung geführt und nachträglich über Kühlwalzen weiter abgekühlt.

Ein Verfahren zur Kühlung eines geschäumten bandförmigen Extrudatstrangs erfolgt in einer Anlage, die einen Extruder, eine Düse, eine Vakuumkühlvorrichtung sowie eine Kühlwalze umfasst. Im Extruder und oder einer dem Extruder nachgeschaltenen Mischvorrichtung wird eine treibmittelhaltige Polymerschmelze erzeugt und die treibmittelhaltige Polymerschmelze der Düse zugeführt. Die Düse weist eine Öffnung auf, durch welche ein bandförmiger Extrudatstrang erzeugt wird. Der bandförmige Extrudatstrang schäumt in oder nach der Düse zu einem geschäumten bandförmigen Extrudatstrang auf. Insbesondere kann das Aufschäumen des bandförmigen Extrudatstrangs unmittelbar anschliessend an die Düse erfolgen. Der aus der Düse austretende noch plastische geschäumte oder noch schäumende bandförmige Extrudatstrang wird zuerst durch eine statische Vakuumkühlvorrichtung gekühlt, sodass ein vorgekühlter geschäumter bandförmiger Extrudatstrang erhalten wird. Der Schäumvorgang ist spätestens nach der Vakuumkühlvorrichtung abgeschlossen. Danach wird der vorgekühlte geschäumte bandförmige Extrudatstrang über eine Kühlwalze geführt. Der vorgekühlte bandförmige geschäumte Extrudatstrang liegt auf der Kühlwalze über einen Umschlingungswinkel von mindestens 20° an, sodass der vorgekühlte bandförmige geschäumte Extrudatstrang gekühlt wird.

Der durch die Vakuumkühlvorrichtung strömende, ein treibmittelhaltiges Polymer enthaltende zumindest teilweise geschäumte Fluidstrom wird als Extrudat oder Extrudatstrang bezeichnet, sobald er die Extruderdüse verlassen hat. Der Fluidstrom im Extruder oder einer dem Extruder nachgeschalteten Mischvorrichtung wird als treibmittelhaltige Polymerschmelze bezeichnet. Die treibmittelhaltige Polymerschmelze wird durch Zugabe eines Treibfluids in eine Polymerschmelze erhalten. Physikalische Treibfluide können in und/oder nach dem Extruder in einer dem Extruder nachgeschalteten Mischvorrichtung zugegeben werden. Die Mischvorrichtung ist vor der Düse angeordnet, sodass die Düse von einer mit physikalischem Treibfluid versetzten Polymerschmelze gespeist wird.

Kommt ein chemisches Treibmittel zum Einsatz, kann dieses zusätzlich zu den bereits in Zusammenhang mit physikalischen Treibfluiden genannten Möglichkeiten bereits dem Polymer vor oder während des Aufschmelzens im Extruder zugesetzt werden.

Nach einem Ausführungsbeispiel kann eine erste Kühlwalze vorgesehen sein, welche mit einer ersten Breitseite des vorgekühlten geschäumten bandförmigen Extrudatstrangs in Kontakt ist, sodass die erste Breitseite des vorgekühlten geschäumten bandförmigen Extrudatstrangs gekühlt wird, wodurch ein einseitig gekühlter geschäumter bandförmiger Extrudatstrang erhalten wird.

Eine zweite Kühlwalze kann vorgesehen sein, welche mit einer zweiten Breitseite des einseitig gekühlten geschäumten bandförmigen Extrudatstrangs in Kontakt ist, sodass die zweite Breitseite des einseitig gekühlten geschäumten bandförmigen Extrudatstrangs gekühlt wird, wodurch ein zweiseitig gekühlter geschäumter bandförmiger Extrudatstrang erhalten wird.

Der bandförmige Extrudatstrang wird insbesondere mittels eines physikalischen Treibfluids geschäumt. Ein bevorzugtes physikalisches Treibfluid ist Kohlendioxid oder Stickstoff oder anderes inertes Gas.

Eine Anlage zur Kühlung eines geschäumten bandförmigen Extrudatstrangs umfasst einen Extruder, eine Düse sowie eine Kühlwalze. Beim Schäumen mit physikalischen Treibmitteln enthält der Extruder oder eine nachfolgende Mischvorrichtung, eine Dosiervorrichtung für ein Treibfluid, sodass eine treibmittelhaltige Polymerschmelze erzeugbar ist. Die treibmittelhaltige Polymerschmelze wird durch den Extruder und eventuell weitere Pumpen in Richtung der Düse transportiert. Beim Schäumen mit chemischen Treibmitteln wird das chemische Treibmittel typischerweise zusammen mit dem Polymer in den Extruder zugegeben und im Extruder und oder einer nachfolgenden Mischvorrichtungen gelöst. Die Düse weist eine Öffnung auf, durch welche ein bandförmiger Extrudatstrang erzeugbar ist. Der bandförmige Extrudatstrang schäumt in oder nach der Düse zu einem geschäumten bandförmigen Extrudatstrang auf. Das heisst, der bandförmige Extrudatstrang ist durch eine Expansion des Treibfluids in einen geschäumten bandförmigen Extrudatstrang transformierbar. Hierbei werden im bandförmigen Extrudatstrang Hohlräume gebildet, die mit Treibfluid gefüllt sind. Insbesondere kann das Aufschäumen unmittelbar anschliessend an die Düse erfolgen. Der aus der Düse austretende geschäumte oder noch schäumende bandförmige Extrudatstrang wird zuerst durch eine statische Vakuumkühlvorrichtung geführt, wodurch ein vorgekühlter geschäumter bandförmiger Extrudatstrang erhältlich ist. Der vorgekühlte geschäumte bandförmige Extrudatstrang wird über eine Kühlwalze geführt. Der vorgekühlte bandförmige geschäumte Extrudatstrang liegt auf der Kühlwalze über einen Umschlingungswinkel von mindestens 20° an.

Insbesondere kann eine erste Kühlwalze vorgesehen sein, welche mit einer ersten Breitseite des vorgekühlten geschäumten bandförmigen Extrudatstrangs in Kontakt ist, sodass die erste Breitseite des vorgekühlten geschäumten bandförmigen Extrudatstrangs auf der Kühlwalze über einen durch den Umschlingungswinkel definierten Längenabschnitt aufliegt, wodurch ein einseitig gekühlter geschäumter bandförmiger Extrudatstrang erhältlich ist.

Nach einem Ausführungsbeispiel kann eine zweite Kühlwalze vorgesehen sein, welche mit einer zweiten Breitseite des bandförmigen Extrudatstrangs in Kontakt ist, sodass die zweite Breitseite des einseitig gekühlten geschäumten bandförmigen Extrudatstrangs auf der zweiten Kühlwalze über den durch einen Umschlingungswinkel definierten Längenabschnitt aufliegt, wodurch ein zweiseitig gekühlter geschäumter bandförmiger Extrudatstrang erhältlich ist.

Insbesondere kann zwischen der Düse und der Vakuumkühlvorrichtung ein Freiraum bestehen. In diesem Freiraum kann ein weitgehend ungehindertes Aufschäumen des bandförmigen Extrudatstrangs erfolgen. Nach einem Ausführungsbeispiel kann im Freiraum ein Gasdüsenelement angeordnet sein.

Unter Freiraum wird hierbei ein Abschnitt verstanden, in welchem der bandförmige Extrudatstrang frei von ortsfesten Führungselementen, wie Böden, Wänden oder Deckenelementen bewegt wird. Der Freiraum ist gleichzeitig auch eine effektive thermische Trennung zwischen der Düse und der Vakuumkühlvorrichtung. Dies ist von Vorteil, da die Düse zur optimalen Verarbeitung der Polymerschmelze beheizt sein muss und die Vakuumkühlvorrichtung zum Verfestigen der Oberfläche des Extrudatstrangs gekühlt werden muss.

Die Vakuumkühlvorrichtung kann nach einem Ausführungsbeispiel derart konfiguriert sein, dass sie mindestens zwei übereinanderliegende, parallel angeordnete Plattenelemente enthält. Insbesondere können die Plattenelemente seitlich offen sein. Die Vakuumkühlvorrichtung kann in Vorschubrichtung des Extrudatstrangs eine Länge von maximal 0.5 Meter aufweisen. Mit Vorschubrichtung des Extrudatstrangs ist die Richtung gemeint, in welcher sich der aus der Düse austretende bandförmige Extrudatstrang vorwärts bewegt. Die Vakuumkühlvorrichtung hat eine derart kurze Baulänge, weil durch sie nicht die gesamte Wärme abgeführt werden muss, sondern ein Teil der Wärme über die Kühlwalzen abgeführt werden kann. Insbesondere kann die Vakuumkühlvorrichtung in Vorschubrichtung des Extrudatstrangs eine Länge von maximal 0.3 Meter aufweisen.

Eines der Plattenelemente kann relativ zum zweiten Plattenelement versetzt angeordnet sein.

Die Vakuumkühlvorrichtung kann als Retrofitlösung in eine Extrusionslinie mit bestehendem Walzwerk eingebaut werden. Das heisst, die Vakuumkühlvorrichtung kann in bereits bestehende Anlagen nachgerüstet werden. Insbesondere kann hierdurch die Qualität des Extrudats erhöht werden. Die Qualität des geschäumten Extrudats kann beispielsweise durch eine engere Zellgrössenverteilung erhöht werden. Das heisst, dass insbesondere die Zellen des Schaums im Inneren des geschäumten Extrudats eine ähnliche Grösse aufweisen. Die Qualität des Schaums kann insbesondere auch durch eine gleichmässigere glatte Oberfläche des Extrudatstranges verbessert werden.

Nachfolgend wird das erfindungsgemässe Verfahren anhand eines Beispiels dargestellt. Es zeigen
Figur 1: Erfindungsgemässes Verfahren mit Vakuumkühlung und Dreiwalzenwalzwerk,
Figur 2: Erfindungsgemässes Verfahren mit mehreren Vakuumkühlvorrichtungen, Dreiwalzenwalzwerk und zusätzlichen Luftdüsen,
Figur 3 einen Schnitt durch eine Vakuumkühlvorrichtung,
Figur 4 einen Schnitt durch den vorgekühlten geschäumten bandförmigen Extrudatstrang,
Figur 5 einen Schnitt durch einen einseitig gekühlten geschäumten bandförmigen Extrudatstrang.

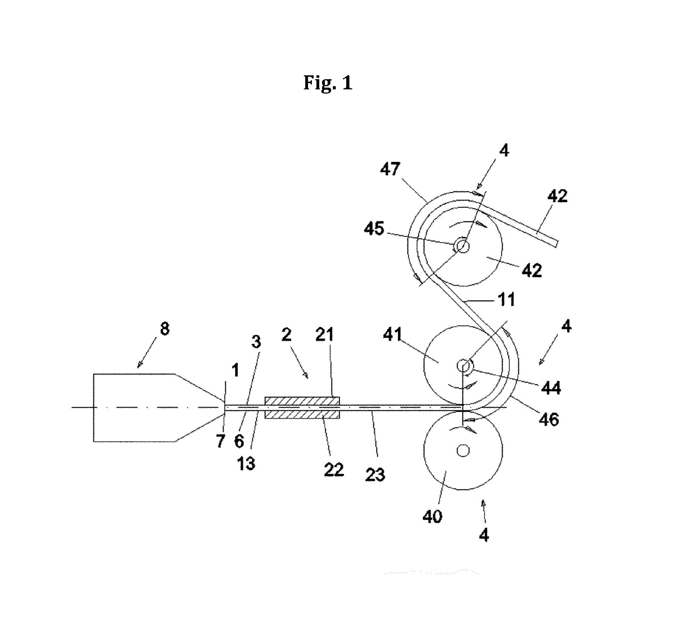

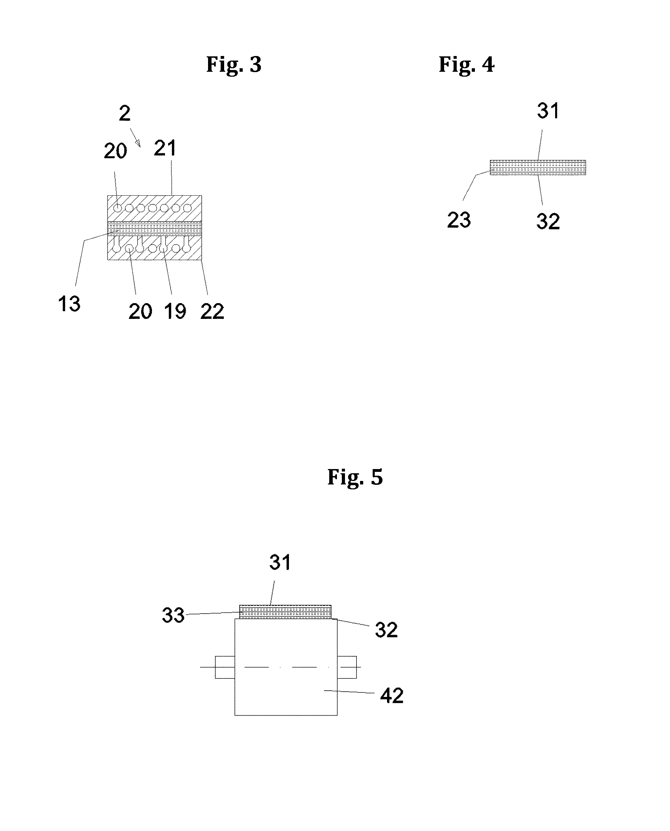

Fig. 1 zeigt ein erstes Ausführungsbeispiel einer Anlage zur Extrusion eines treibmittelhaltigen bandförmigen Extrudatstrangs 3. Der Extruder 8 zur Erzeugung des bandförmigen Extrudatstrangs 3 ist nur schematisch dargestellt. Der bandförmige Extrudatstrang 3 strömt aus der Düse 1, wobei die Schaumbildung bevorzugt nach der Düse erfolgt, je nach Prozess teilweise aber auch in der Düse stattfindet. Im Anschluss an den Austritt durch die Düse 1 wird der Extrudatstrang 3 in einer Vakuumkühlvorrichtung 2 und danach in einem Dreiwalzenwerk 4 gekühlt. Zwischen der Düse 1 und der Vakuumkühlvorrichtung 2 ist ein Freiraum 6 vorgesehen, um zu verhindern, dass eine Beeinträchtigung der Kühlleistung der Vakuumkühlvorrichtung 2 durch die Düse 1 erfolgt. Die Vakuumkühlvorrichtung 2 besteht aus mindestens zwei übereinanderliegenden parallelen vorteilhaft seitlich offenen Platten 21, 22. In mindestens einer der Platten 21, 22 sind Kanäle 20 für eine Kühlflüssigkeit sowie in mindestens einer Platte Vakuumkanäle 19 für das Anlegen eines Vakuums vorgesehen, die in Fig. 3 dargestellt sind. Die Vakuumkanäle 19 weisen dabei eine Verbindung zur Plattenoberfläche auf, damit das Vakuum an der Extrudatoberfläche wirksam wird. Die Kühlung erfolgt vorteilhafterweise durch Flüssigkeiten, wie Wasser oder Thermalöl. Die Kühlflüssigkeit strömt durch die Kanäle 20. Die Platten 21, 22 können eine Oberflächenstruktur und / oder eine Beschichtung aufweisen um ein Anhaften des Extrudates an der Plattenoberfläche zu verhindern. Vorteilhafterweise wird das flache Extrudat von zwei gegenüberliegenden Platten begrenzt. Möglich ist aber auch die Verwendung einzelner Platten oder mehrerer Platten oder Platten und Plattenpaaren in Serie.

Unter Vakuum wird die Absenkung des Druckes unter den Umgebungsdruck verstanden. Das Extrudat 3 wird in der Vakuumkühlvorrichtung 2 kalibriert. Das Anlegen von Vakuum führt zur Glättung der Oberfläche des geschäumten oder noch schäumenden auf jeden Fall aber noch plastischen Extrudates. Der Schaumbildungsprozess wird vorteilhafterweise in der Vakuumkühlvorrichtung 2 abgeschlossen und die Oberfläche stabilisiert. Die Vakuumkühlvorrichtung 2 wird vorteilhafterweise relativ kurz gebaut, um die Reibungskräfte klein zu halten und um das Ablösen des Extrudates von der Apparatewandung zu verhindern. Dies wird dadurch möglich, dass ein Teil der Kühlleistung durch die nachfolgenden Kühlwalzen des Walzwerks 4 erbracht wird. Die Länge der Vakuumkühlvorrichtung 2 in Extrusionsrichtung beträgt maximal 0.5 m, insbesondere maximal 0.3 m.

Nach der Vakuumkühlvorrichtung 2 wird das Extrudat 3 in das Dreiwalzenwalzwerk eingeführt. Das Dreiwalzenwalzwerk weist eine erste Kühlwalze 40 auf, auf welcher der vorgekühlte geschäumte bandförmige Extrudatstrang 23 aufliegt. Eine zweite Kühlwalze 41 ist oberhalb der ersten Kühlwalze 40 angeordnet. Die Kühlwalze 40 bildet in Kombination mit der Kühlwalze 41 einen Spalt, in dem der Extrudatstrang 23 vorteilhafterweise auf beiden Seiten anliegt und dadurch durch die Vakuumkühlvorrichtung 2 gezogen wird. Alternativ oder zusätzlich zur Walze 40 können auch weitere Walzenpaare an beliebigem Ort nach der Vakuumkühlvorrichtung 2 zum Durchziehen des Extrudatstranges angebracht werden, was zeichnerisch nicht dargestellt ist. Auf der zweiten Kühlwalze 41 liegt der vorgekühlte bandförmige geschäumte Extrudatstrang entlang eines Längenabschnitts 46 auf, der einen Umschlingungswinkel 44 aufspannt, sodass der vorgekühlte geschäumte bandförmige Extrudatstrang 23 entlang eines Umschlingungswinkels von mindestens 20°, insbesondere mindestens 90° auf der Oberfläche der zweiten Kühlwalze 41 aufliegt. Über die Oberfläche der dritten Kühlwalze 42 wird der einseitig gekühlte geschäumte bandförmige Extrudatstrang 33 weiter gekühlt. Der einseitig gekühlte geschäumte bandförmige Extrudatstrang 33 liegt entlang eines Längenabschnitts 47, der einen Umschlingungswinkel 45 aufspannt, auf der Oberfläche der dritten Kühlwalze 42 auf. Der Umschlingungswinkel 45 beträgt mindestens 20°, insbesondere mindestens 90°. Das heisst, der gesamte auf der Oberfläche aufliegende Längenabschnitt 47 des einseitig gekühlten geschäumten bandförmigen Extrudatstrangs 33 kann für die Kühlung verwendet werden.

Somit muss der vorgekühlte geschäumte bandförmige Extrudatstrang 23 auf mindestens einer Kühlwalze über einen Umschlingungswinkel von mindestens 20° anliegend sein, um einen ausreichenden Kühleffekt zu gewährleisten.

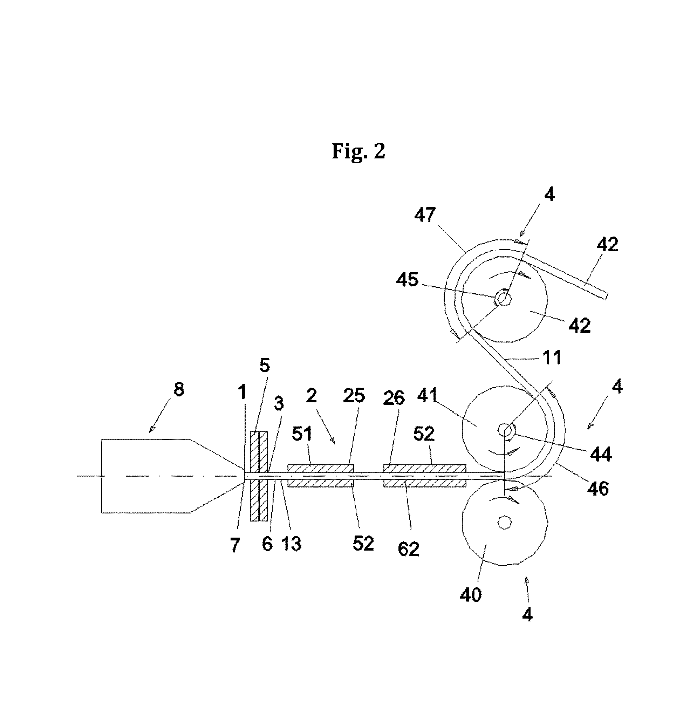

Die in Fig. 1 und Fig. 2 dargestellten Dreiwalzenwalzwerke mit einer ersten Walze 40, den zweiten und dritten Kühlwalzen 41, 42 haben sich in der Praxis bewährt. Hierbei liegt der Extrudatstrang auf beiden Kühlwalzen 41, 42 über einen Winkel von mindestens 90° auf. Wenn die Kühlwalzen 41 und 42 gleiche Durchmesser aufweisen, kann der Umschlingungswinkel 44 im wesentlichen gleich wie der Umschlingungswinkel 45 ausgebildet sein. Der Umschlingungswinkel kann durch ein Ändern der Position der Kühlwalzen zueinander verändert werden. Die Walze 40 kann als Kühlwalze ausgebildet sein. In der vorliegenden Darstellung erfolgt ein Kontakt des vorgekühlten geschäumten bandförmigen Extrudatstrangs mit der Walze allerdings nur für eine kurze Zeit, sodass die zweite Breitseite des vorgekühlten geschäumten bandförmigen Extrudatstrangs kaum gekühlt wird. Die Walze 40 dient der Führung des vorgekühlten geschäumten bandförmigen Extrudatstrangs 23.

In Fig. 2 ist eine Variante einer Vorrichtung zur Durchführung des erfindungsgemässen Verfahrens gezeigt. Eine zusätzliche Kühlung erfolgt durch Gasdüsen 5. Eine derartige Gasdüse ist im vorliegenden Ausführungsbeispiel im Bereich des Freiraums 6 zwischen der Düse 1 und der Vakuumkühlvorrichtung 2 angeordnet. Aus den Gasdüsen 5 strömt ein Gas auf die Oberfläche des Extrudats 3 Das Gas kann Luft enthalten. Die Gasdüsen 5 können an beliebigen Orten eingesetzt werden. Das heisst abweichend von der dargestellten Position zwischen Düse 1 und Vakuumkühlvorrichtung 2 können die Gasdüsen auch stromabwärts der Vakuumkühlvorrichtung 2 angeordnet sein, was zeichnerisch nicht dargestellt ist. Die Vakuumkühlvorrichtung 2 besteht gemäss Fig. 2 aus einer ersten Vakuumkühlvorrichtung 25 sowie einer zweiten Vakuumkühlvorrichtung 26. Jede der ersten und zweiten Vakuumkühlvorrichtungen kann aus parallelen, offenen Platten bestehen. Die erste Vakuumkühlvorrichtung 25 besteht aus den Platten 51, 52 und die zweite Vakuumkühlvorrichtung 26 besteht aus den Platten 61, 62. Zwischen der ersten Vakuumkühlvorrichtung 25 und der zweiten Vakuumkühlvorrichtung 26 kann ebenfalls eine Gasdüse angeordnet sein, was in der Zeichnung nicht dargestellt ist. Bei Verwendung von mehreren Vakuumkühlvorrichtungen kann auch eine der Kühlvorrichtungen aus einer oder zwei gegenüberliegenden gekühlten Platten bestehen, ohne dass ein Vakuum angelegt wird. Die Vakuumkühlvorrichtung kann als Variante auch seitlich geschlossen ausgeführt werden.

Die Platten der Vakuumkühlvorrichtung 2, 25, 26 nach jedem der Ausführungsbeispiele und die Oberflächen der Walzen oder Kühlwalzen 40, 41, 42 des Walzwerks 4 können auch eine Kontur wie zum Beispiel Rillen oder Rippen aufweisen.

Figur 3 zeigt einen Schnitt durch eine Vakuumkühlvorrichtung 2. Der geschäumte bandförmige Extrudatstrang 13 verläuft zwischen einer ersten Platte 21 und einer zweiten Platte 22. Die erste Platte 21 enthält eine Mehrzahl von Kühlkanälen 20. Die Kühlkanäle 20 enthalten im Betriebszustand ein Kühlfluid, insbesondere Wasser oder Thermalöl. Die zweite Platte enthält ebenfalls Kühlkanäle 20 sowie zusätzlich Vakuumkanäle 19. Die Vakuumkanäle 19 unterscheiden sich von den Kühlkanälen dergestalt, dass sie in Richtung der Oberfläche des geschäumten bandförmigen Extrudatstrangs offen sind.

Figur 4 einen Schnitt durch den vorgekühlten geschäumten bandförmigen Extrudatstrang 23. Der vorgekühlte geschäumte bandförmige Extrudatstrang 23 hat eine im wesentlichen rechteckige Querschnittsfläche, die von einer ersten Breitseite 31, einer zweiten Breitseite 32 nach oben bzw. unten begrenzt ist. Die erste Breitseite 31 wurde durch die Kühlvorrichtung in der Platte 21 vorgekühlt. Die zweite Breitseite 32 wurde durch die Kühlvorrichtung der Platte 32 vorgekühlt. Der vorgekühlte geschäumte bandförmige Extrudatstrang 23 kann aus mehreren Teilsträngen bestehen, was in den Zeichnungen nicht dargestellt ist.

Figur 5 einen Schnitt durch den einseitig gekühlten geschäumten bandförmigen Extrudatstrang 33, welcher auf der zweiten Kühlwalze 42 aufliegt. Das heisst, die zweite Breitseite 32 des einseitig gekühlten geschäumten bandförmigen Extrudatstrang 33 liegt auf der Oberfläche der Kühlwalze 42 auf. Daher erfolgt ein Wärmeaustausch zwischen dem einseitig gekühlten geschäumten bandförmigen Extrudatstrang 33 und der Kühlwalze 42. Die Kühlwalze ist insbesondere drehbar gelagert, sodass sie sich mit dem Extrudatstrang mitbewegt. Die Lagerung sowie der Antrieb der Kühlwalze 42 sind nicht gezeigt.

Das erfindungsgemässe Kühlverfahren eignet sich sowohl für geschäumte Monoextrudate wie auch für Mehrschichtextrudate. Unter einem Monoextrudat soll ein Extrudat verstanden werden, welches aus einer einzigen Schicht besteht also ein Polymer oder ein Polymergemisch ist, welches über die gesamte Breite sowie die gesamte Höhe des bandförmigen Extrudatstrangs in im wesentlichen homogener Verteilung vorliegt. Das Polymer- oder Polymergemisch enthält eine Zellstruktur, welche im Polymer oder Polymergemisch im Wesentlichen homogen verteilt vorliegt.

Unter einem Mehrschichtextrudat soll ein Extrudat verstanden werden, welches mehr als eine einzige Schicht umfasst also eine Mehrzahl von Polymeren oder Polymergemischen enthält. Jede der ein Polymer oder Polymergemisch enthaltenden Schichten liegt über einen Teil der Breite und/oder über einen Teil der Höhe des bandförmigen Extrudatstrangs innerhalb der Schicht in im wesentlichen homogener Verteilung vor. Zumindest eines der Polymer- oder Polymergemische enthält eine Zellstruktur, welche im Polymer oder Polymergemisch im Wesentlichen homogen verteilt vorliegt. Bei mehrschichtigem Aufbau des bandförmigen Extrudatstrangs können einzelne oder mehrere Schichten durch die Vakuumkühlvorrichtung geführt werden. Auf das Mono- oder Mehrschichtextrudat können an beliebiger Stelle nach der Düse 1 mittels Haftvermittler weitere Schichten laminiert werden.

Das erfindungsgemässe Verfahren eignet sich auch als Retrofitlösung. So gibt es im Stand der Technik eine Vielzahl von Kühlvorrichtungen zur Herstellung von nichtgeschäumten flachen Extrudaten, als bandförmigen Extrudatstrang, bei welchen der bandförmige Extrudatstrang über ein Dreiwalzenwalzwerk geführt wird. Wenn auf einer Kühlvorrichtung nach dem Stand der Technik geschäumte Extrudate verarbeitet werden, so ist vielfach die Kühlleistung des Dreiwalzenwalzwerkes 4 durchsatzlimitierend. Das heisst, die Vorschubgeschwindigkeit des bandförmigen Extrudatstrangs muss gering genug gehalten werden, um die anfallende Wärme abzuführen. Mit der Nachrüstung einer Vakuumkühlvorrichtung 2 zu einem erfindungsgemässen Verfahren wird die Kühlleistung bei gleichzeitiger Optimierung der Oberflächenqualität erheblich erhöht.

## Patentansprüche

1. Verfahren zur Kühlung eines geschäumten bandförmigen Extrudatstrangs (3) in einer Anlage, die einen Extruder (8), eine Düse (1), eine Vakuumkühlvorrichtung (2) sowie eine Kühlwalze umfasst, wobei in dem Extruder (8) oder einer dem Extruder nachgeschaltenen Mischvorrichtung eine treibmittelhaltige Polymerschmelze erzeugt wird, die treibmittelhaltige Polymerschmelze der Düse (1) zugeführt wird, wobei die Düse (1) eine Öffnung (7) aufweist, durch welche ein bandförmiger Extrudatstrang (3) erzeugt wird, welcher in oder nach der Düse (1), zu einem geschäumten bandförmigen Extrudatstrang (13) aufschäumt, **dadurch gekennzeichnet, dass** der aus der Düse (1) austretende noch plastische geschäumte oder noch schäumende bandförmige Extrudatstrang (13) zuerst durch eine statische Vakuumkühlvorrichtung (2, 25, 26) gekühlt wird, sodass ein vorgekühlter geschäumter bandförmiger Extrudatstrang (23) erhalten wird und der vorgekühlte geschäumte bandförmige Extrudatstrang (23) über eine Kühlwalze (40, 41, 42) geführt wird, wobei der vorgekühlte bandförmige geschäumte Extrudatstrang (23) auf der Kühlwalze (41,42) über einen Umschlingungswinkel von mindestens 20° anliegt sodass der vorgekühlte bandförmige geschäumte Extrudatstrang (23) gekühlt wird.

2. Verfahren nach Anspruch 1, wobei eine erste Kühlwalze (41) vorgesehen ist, welche mit einer ersten Breitseite (31) des vorgekühlten geschäumten bandförmigen Extrudatstrangs (23) in Kontakt ist, sodass die erste Breitseite (31) des vorgekühlten geschäumten bandförmigen Extrudatstrangs (23) gekühlt wird, wodurch ein einseitig gekühlter geschäumter bandförmiger Extrudatstrang (33) erhalten wird.

3. Verfahren nach Anspruch 2, wobei eine zweite Kühlwalze (42) vorgesehen ist, welche mit einer zweiten Breitseite (32) des einseitig gekühlten geschäumten bandförmigen Extrudatstrangs (33) in Kontakt ist, sodass die zweite Breitseite (32) des einseitig gekühlten geschäumten bandförmigen Extrudatstrangs (33) gekühlt wird, wodurch ein zweiseitig gekühlter geschäumter bandförmiger Extrudatstrang (43) erhalten wird.

4. Verfahren nach einem der vorhergehenden Ansprüche, wobei der bandförmige Extrudatstrang (3) mittels eines physikalischen Treibfluids geschäumt wird.

5. Anlage zur Kühlung eines geschäumten bandförmigen Extrudatstrangs (13), die einen Extruder (8), eine Düse (1) sowie eine Kühlwalze (40, 41, 42) umfasst, wobei der Extruder (8) oder eine dem Extruder nachgeschaltene Mischvorrichtung eine Dosiervorrichtung für ein Treibfluid enthält, sodass eine treibmittelhaltige Polymerschmelze erzeugbar ist, wobei die treibmittelhaltige Polymerschmelze in Richtung der Düse (1) transportierbar ist, wobei die Düse (1) eine Öffnung aufweist, durch welche ein bandförmiger Extrudatstrang (3) erzeugbar ist, welcher in oder nach der Düse, zu einem geschäumten bandförmigen Extrudatstrang (13) aufschäumt, **dadurch gekennzeichnet, dass** der aus der Düse (1) austretende geschäumte bandförmige Extrudatstrang (13) zuerst durch eine statische Vakuumkühlvorrichtung (2, 25, 26) geführt wird, wodurch ein vorgekühlter geschäumter bandförmiger Extrudatstrang (23) erhältlich ist und der vorgekühlte geschäumte bandförmige Extrudatstrang (23) über eine Kühlwalze (40, 41, 42) geführt wird, wobei der vorgekühlte bandförmige geschäumte Extrudatstrang (23) auf der Kühlwalze (41, 42) über einen Umschlingungswinkel (44) von mindestens 20° anliegt.

6. Anlage nach Anspruch 5, wobei eine erste Kühlwalze (41) vorgesehen ist, welche mit einer ersten Breitseite des vorgekühlten geschäumten bandförmigen Extrudatstrangs (23) in Kontakt ist, sodass die erste Breitseite des vorgekühlten geschäumten bandförmigen Extrudatstrangs auf der Kühlwalze über einen durch den Umschlingungswinkel (44) definierten Längenabschnitt (46) aufliegt, wodurch ein einseitig gekühlter geschäumter bandförmiger Extrudatstrang (33) erhältlich ist.

7. Anlage nach Anspruch 6, wobei eine zweite Kühlwalze (42) vorgesehen ist, welche mit einer zweiten Breitseite des bandförmigen Extrudatstrangs in Kontakt ist, sodass die zweite Breitseite des einseitig gekühlten geschäumten bandförmigen Extrudatstrangs (33) auf der zweiten Kühlwalze (42) über den durch einen Umschlingungswinkel (45) definierten Längenabschnitt (47) aufliegt, wodurch ein zweiseitig gekühlter geschäumter bandförmiger Extrudatstrang (43) erhältlich ist.

8. Anlage nach einem der Ansprüche 5 bis 7, wobei zwischen Düse (1) und Vakuumkühlvorrichtung (2) ein Freiraum (6) besteht.

9. Anlage nach einem der Ansprüche 5 bis 8, wobei die Vakuumkühlvorrichtung (2, 25, 26) mindestens zwei übereinanderliegende, parallel angeordnete Plattenelemente (21, 22, 51, 52, 61, 62) enthält.

10. Anlage nach Anspruch 9, wobei die Plattenelemente (21, 22, 51, 52, 61, 62)
seitlich offen sind.

11. Anlage nach einem der Ansprüche 5 bis 10, wobei die Vakuumkühlvorrichtung (2) in Vorschubrichtung des Extrudatstrangs eine Länge von maximal 0.5 Meter aufweist.

12. Anlage nach einem der Ansprüche 5 bis 11, wobei die Vakuumkühlvorrichtung (2, 25, 26) in Vorschubrichtung des Extrudatstrangs eine Länge von maximal 0.3 Meter aufweist.

13. Anlage nach einem der Ansprüche 8 bis 12, wobei ein Gasdüsenelement (5) in dem Freiraum (6) angeordnet ist.

14. Anlage nach einem der Ansprüche 9 bis 13, wobei eines der Plattenelemente (21, 51,61) relativ zum zweiten Plattenelement (22, 52, 62) versetzt angeordnet ist.

15. Anlage nach einem der Ansprüche 5 bis 14, wobei die Vakuumkühlvorrichtung (2) als Retrofitlösung in eine Extrusionslinie mit bestehendem Walzwerk (4) eingebaut wird.
